# EUROPÄISCHE PATENTSCHRIFT

(11) **EP 0 500 863 B1**
(45) Veröffentlichungstag und Bekanntmachung des Hinweises auf die Patenterteilung: **19.04.1995**
(21) Anmeldenummer: 91915524.2
(22) Anmeldetag: 06.09.1991
(51) Int. Cl.: B60T 8/28

(54) **LAGERUNG FÜR EINE TRÄGHEITSKUGEL EINES VERZÖGERUNGSABHÄNGIGEN BREMSKRAFTREGLERS**
INERTIAL-BALL MOUNTING FOR A DECELERATION-DEPENDENT BRAKE-FORCE CONTROL UNIT
PALIER POUR LA BILLE D'INERTIE D'UN SYSTEME ANTIBLOCAGE DES ROUES EN FONCTION DE LA DECELERATION

(30) Priorität: 19.09.1990 DE 4029597; 16.08.1991 DE 4127044
(43) Veröffentlichungstag der Anmeldung: 02.09.1992
(73) Patentinhaber: ITT Automotive Europe GmbH, 60488 Frankfurt (DE)
(72) Erfinder: Schonlau, Jürgen, W-6229 Walluf (DE); Von Hayn, Holger, W-6368 Bad Vilbel (DE)
(86) Internationale Anmeldenummer: EP9101694
(87) Internationale Veröffentlichungsnummer: WO9205055

(56) Entgegenhaltungen:
- DE-A- 1 555 095
- DE-A- 1 938 875
- GB-A- 2 202 597
- US-A- 3 377 108

## Beschreibung

Die vorliegende Erfindung betrifft einen verzögerungsabhängigen Bremskraftregler mit den Merkmalen des Oberbegriffs des Anspruchs 1.

Ein Verzögerungsabhängiger Bremskraftregler ist aus der DE-A 15 55 095 bekannt. Die darin verwendete Trägheitskugel liegt in ihrer Ruhelage auf dem Boden des ersten Raumes und ist in dieser Ruhelage gegen seitliches Wegrollen durch eine stufige Anordnung auf der Bodenfläche, rings um den Ventilbetätigungsstift gesichert. Da diese Trägheitskugel sich in einem mit Druckmittel gefüllten Raum befindet, ist diese Anordnung sehr viskositätsabhängig und außerdem durch die große Kontaktfläche des Trägheitskörpers mit der Bodenfläche hysteresebehaftet durch auftretende Klebeeffekte zwischen der Trägheitskugel und der Bodenfläche.

In der DE-A 37 09 991 ist daher vorgeschlagen worden, die Trägheitskugel im druckmittelfreien Raum anzuordnen.

Damit sollen Viskositäts- und Hystereseeinflüsse ausgeschaltet werden. Die Trägheitskugel liegt in einer ersten Ausführungsform in einer trichterförmigen Vertiefung mit verschiedenen Neigungswinkeln, die von radial nach innen zu einem Steuerventil weisenden Rippen gebildet wird. Durch die verschiedenen Neigungswinkel erhält die Trägheitskugel ein ovales Bett und dadurch ein gewisses horizontales Spiel. Sie hält das Steuerventil geöffnet und soll bei Überschreitung eines bestimmten Verzögerungsmomentes aus dem Trichter herausrollen und so dem Ventil erlauben, sich zu schließen. Allerdings hat sich gezeigt, daß schon bei geringen Verzögerungsmomenten durch Vibrationen des Fahrzeugs die Kugel zu tanzen oder sich zu drehen beginnt und somit eine große Streuung der Umschaltpunkte bewirkt.

In einer weiteren Ausführungsform der DE-A 37 09 991 liegt die Trägheitskugel in Ruhelage unbeweglich auf dem Rand einer topfartigen Vertiefung. Die ringförmige Berührungslinie führt aber zu einer Verklebung der Trägheitskugel mit der Lagerung, wenn die Trägheitskugel mit überschwappendem Druckmittel benetzt wird.

Der vorliegenden Erfindung liegt die Aufgabe zugrunde, einen verzögerungsabhängigen Bremskraftregler mit den Merkmalen des Oberbegriffs des Hauptanspruchs zu schaffen, welcher durch eine geeignete Lagerung eine weitestgehend ruhige Lage der Trägheitskugel bis zum Erreichen eines festgelegten Umschaltwertes der Verzögerung gewährleistet und andererseits Anheftungen der Trägheitskugel an großflächigen Berührungsstellen vermeidet.

Diese Aufgabe wird jeweils mit Hilfe der kennzeichnenden Merkmale der Ansprüche 1,2,3 oder 6 gelöst. Die Berührungsflächen der Trägheitskugel mit der sie umgebenden Lagerung sind nur klein. Trotzdem ist ein Flattern der Trägheitskugel ausgeschlossen, da sie keinen horizontalen Bewegungsspielraum hat.

Eine Abstützung der Trägheitskugel nach hinten zum Erreichen größerer Stabilität ist empfehlenswert und beeinträchtigt kaum die Funktion des Bremskraftreglers, da die Trägheitskugel bei dieser Ausführung nur bei positiver Beschleunigung am Verlassen der Lagerung gehindert wird. Wenn diese Abstützung durch die den ersten Raum begrenzende rückwärtige Wand geschieht, erübrigt sich die Montage von zusätzlichen Elementen. Werden dazu jedoch Stifte von außen horizontal von hinten in den ersten Raum eingeführt, so läßt sich vorteilhafterweise nachträglich noch eine Feinjustierung vornehmen.

Ob unterhalb der Trägheitskugel ein in Umfangsrichtung verlaufender teilkreisförmiger Stützsockel oder einzelne Stützpunkte von Vorteil sind, zeigt sich im jeweiligen Einzelfall.

Die Erfindung erlaubt die verschiedensten Ausführungen. Einige Beispiele davon werden im folgenden anhand von Zeichnungen näher beschrieben.

Es zeigt:
- Fig. 1a: einen Ausschnitt aus einem Bremskraftregler mit erfindungsgemäßer Lagerung der Trägheitskugel,
- Fig. 1b: einen Schnitt durch Fig. 1a, die Linie A-A entlang,
- Fig. 2a + 2b: ein zweites Ausführungsbeispiel der erfindungsgemäßen Lagerung in Seitenansicht bzw. Draufsicht,
- Fig. 3a + 3b: ein drittes Ausführungsbeispiel in Seitenansicht bzw. Draufsicht,
- Fig. 4a + 4b: eine vierte Ausführung in Seitenansicht bzw. Draufsicht.
- Fig. 5a + 5b: einen weiteren Ausschnitt aus einem Bremskraftregler in Seitenansicht sowie die darin dargestellte Lagerung in Draufsicht.

Gleiche Teile tragen jeweils dieselben Bezugszeichen.

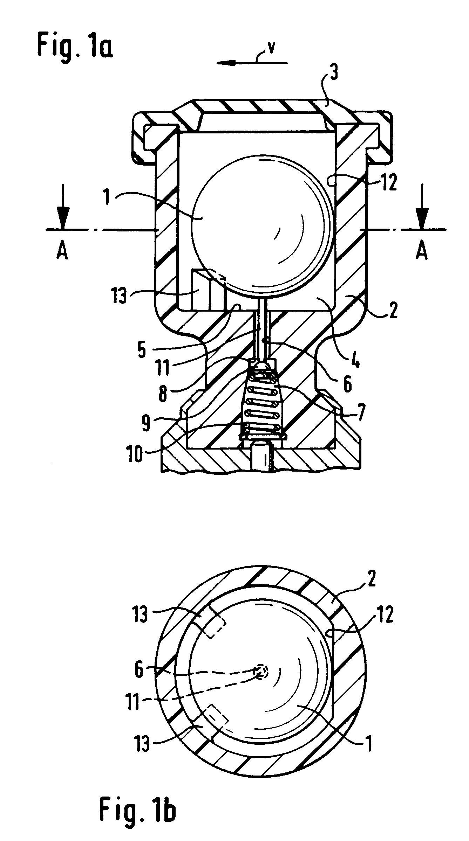

Aus Fig. 1a und Fig. 1b ist die Lage der Trägheitskugel 1 im Raum 4 ersichtlich. Dieser Raum 4 wird von einem Gehäuse 2 und einer verschlußkappe 3 gebildet. Die nahezu ebene Bodenfläche 5 weist ein senkrecht verlaufendes Loch 6 auf, welches den Raum 4 mit dem Raum 7 verbindet. Die Mündung des Lochs 6 in den Raum 7 ist als Ventilsitz 8 für ein im wesentlichen kugelförmiges Ventilschließglied 9 gestaltet, welches zum Ventilsitz 8 hin von einer Druckfeder 10 beaufschlagt ist. Das Ventilschließglied 9 ist fest verbunden mit einem Ventilbetätigungsstift 11, welcher durch das Loch 6 vom Raum 7 in den Raum 4 ragt. Die durch die vorgesehene Fahrtrichtung v definierte Rückwand 12 des Raums 4 stützt die Trägheitskugel 1 tangential in Mittelpunktshöhe nach hinten ab. An der Vorderseite der Trägheitskugel 1 werden weitere Abstützungen von zwei Sockeln 13 gebildet, welche die Trägheitskugel 1 in stabiler Ruhelage in solcher Höhe halten, daß sie nicht mit der Bodenfläche 5 in Berührung kommt, jedoch das Ventilschließglied 9 über den Ventilbetätigungsstift 11 vom Ventilsitz 8 fernhält.

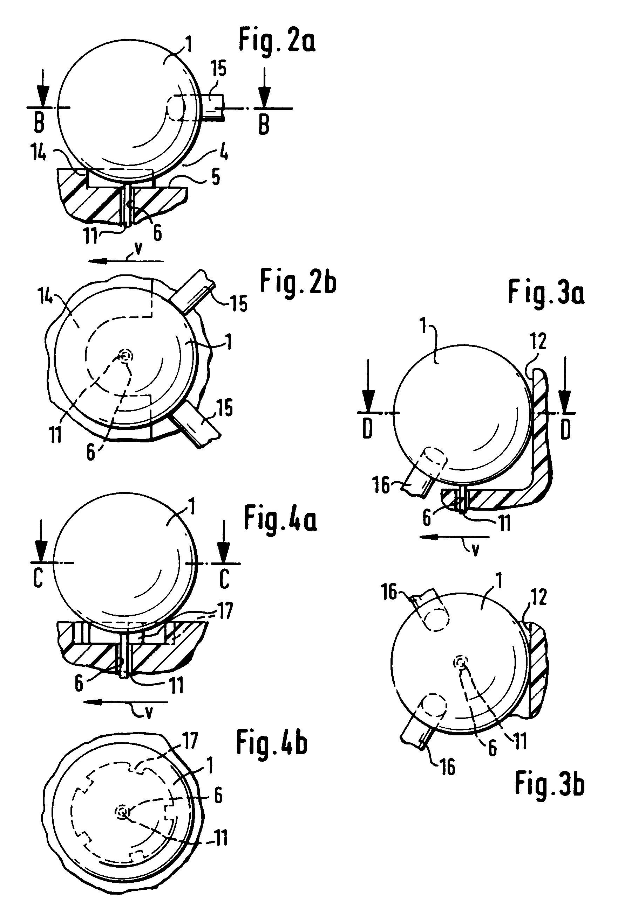

In der Ausführung nach Fig. 2a und 2b geschieht die Abstützung der Trägheitskugel 1 in Fahrtrichtung v durch eine U-förmige Stufe 14, die mit der Kugel eine teilkreisförmige Berührungslinie aufweist. Nach hinten wird die Trägheitskugel 1 von zwei mit abgeflachten Stirnseiten versehenen Stiften 15 gehalten, welche waagerecht zum Mittelpunkt der Trägheitskugel 1 weisend in den Raum 4 eingeführt und dem gewünschten Sitz der Trägheitskugel 1 entsprechend justiert sind.

In Fig. 3a und Fig. 3b sind solche Stifte 16 als Lagerung der Trägheitskugel 1 in Fahrtrichtung v vorgesehen. Sie weisen - schräg von unten kommend - zum Mittelpunkt der Trägheitskugel 1. Hier dient wie in Fig. 1 die Rückwand 12 zur Abstützung von hinten.

In der Ausführung nach Fig. 4a und Fig. 4b ist die Fahrtrichtung gegenüber anderen Richtungen nicht besonders ausgezeichnet. Mindestens drei, in diesem Beispiel fünf gleiche Sockel 17 sind symmetrisch in einem Kreis um das Loch 6 herum angeordnet, so daß hier ein Einbau des Reglers in fünf verschiedenen Richtungen in einem Winkel von jeweils 72° zueinander möglich ist.

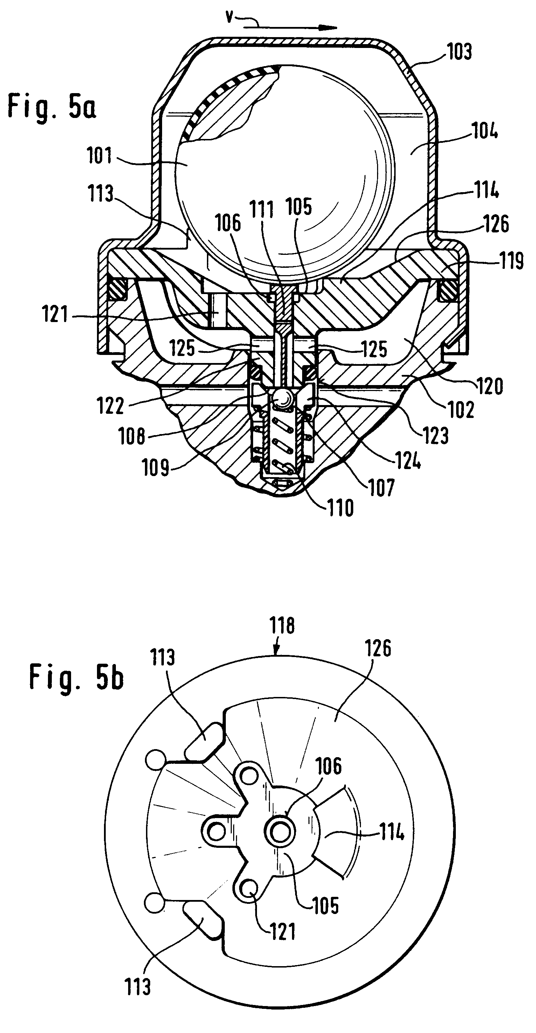

In Fig. 5 finden aufgrund der Verschiedenheit von den bisherigen Anordnungen andere Bezugszeichen Verwendung. Allerdings sind diese für Teile, deren Funktion der von Teilen der vorherigen Zeichnungen entspricht, lediglich um 100 erhöht.

In dieser Figur wird durch den Einsatz 119 zwischen dem ersten Raum 104 und dem zweiten Raum 105 ein weiterer Raum 120 gebildet. Im Raum 104 befindet sich die Trägheitskugel 101, während der Raum 120 dazu dient, aufsteigendes Druckmittel aufzufangen. Die Trägheitskugel 101 kommt allenfalls bei größeren Erschütterungen mit Druckmittel in Berührung. Für solche Fälle ist die Bodenfläche 105 des Einsatzes 119 mit mehreren Löchern 121 versehen, die die beiden Räume 104,120 miteinander verbinden. Während der Raum 120 von einer Ausnehmung im Gehäuse 102 gebildet wird, ist der obere Raum 104 von der topartig gestalteten Verschlußkappe 103 umgeben, die mit dem Gehäuse 102 druckdicht verstemmt ist und den Einsatz 119 festklemmt. Diese Anordnung erspart bei der Schaffung des oberen Raums 104 eine spanabhebende Räumung aus einem Gehäuseblock.

Der Ventilsitz 108 befindet sich am Fortsatz 122 des Einsatzes 119. Der Fortsatz ragt nach unten abgedichtet in die Axialbohrung 123 des Gehäuses 102 und besitzt radiale Löcher 125 vom Loch 106 zum Raum 120. Das zentrische Loch 106 verläuft axial durch den gesamten Einsatz 119 und führt den Ventilbetätigungsstift 111. Dieser hält das Ventilschließglied 109 auf Distanz vom Ventilsitz 108. Am blinden Ende der Axialbohrung 123 stützt sich die Druckfeder 110 ab, die das Ventilschließglied 109 in Schließrichtung beaufschlagt. Das Ventilschließglied 109 ist in der Führungshülse 124 axial geführt. Die Führungshülse 124 besitzt radiale Durchlässe (nicht zeichnerisch dargestellt), die den Raum 107 mit den radialen Kanälen 125 verbinden, welche zu einem oder zu mehreren Bremsdruckregelventilen führen.

Die Lagerung der Trägheitskugel 101 setzt sich aus der teilkreisförmigen Stufe 114 und den Sockeln 113 zusammen. Die Stufe 114 ist vom Loch 106 aus in Fahrtrichtung v angeordnet und befindet sich näher am Loch 106 als die zwei Sockel 113, die spiegelsymmetrisch zur Fahrtrichtung v hinter dem Loch 106 liegen und die Trägheitskugel 101 nach hinten abstützen. Die Höhe der Sockel 113 ist entsprechend ihrem Abstand vom Loch 106 so bemessen, daß der Mittelpunkt der Trägheitskugel 101 sich in Ruhelage, d. h. im stabilen Gleichgewicht, direkt über dem Ventilbetätigungsstift 111 befindet. Die Stufe 114 wie auch die Sockel 113 sind an die kegelstumpfförmige, stumpfwinklige Vertiefung 126 angeformt, deren Boden die Bodenfläche 105 bildet. Damit Stufe 114 und Sockel 113 von der Trägheitskugel 101 auch bei stärkeren Erschütterungen nicht beschädigt werden, ist letzere mit einem elastomeren, druckmittelresistenten Material ummantelt. Eine möglicherweise von dieser weichen Beschichtung begünstigte Haftung der Trägheitskugel 101 an ihrer Lagerung aufgrund einer Druckmittelbenetzung wird durch die kleinen Kontaktflächen und den schnellen Druckmittelrücklauf durch die Löcher 121 wirkungsvoll unterbunden.

### Bezugszeichenliste:

- 1: Trägheitskugel
- 2: Gehäuse
- 3: Verschlußkappe
- 4: Raum
- 5: Bodenfläche
- 6: Loch
- 7: Raum
- 8: Ventilsitz
- 9: Ventilschließglied
- 10: Druckfeder
- 11: Ventilbetätigungsstift
- 12: Rückwand
- 13: Sockel
- 14: Stufe
- 15: Stifte
- 16: Stifte
- 17: Sockel
- 101: Trägheitskugel
- 102: Gehäuse
- 103: Verschlußkappe
- 104: Raum
- 105: Bodenfläche
- 106: Loch
- 107: Raum
- 108: Ventilsitz
- 109: Ventilschließglied
- 110: Druckfeder
- 111: Ventilbetätigungsstift
- 113: Sockel
- 114: Stufe
- 119: Einsatz
- 120: Raum
- 121: Löcher
- 122: Fortsatz
- 123: Axialbohrung
- 124: Führungshülse
- 125: radiale Kanäle
- 126: Vertiefung
- v: Fahrtrichtung

## Patentansprüche

1. Verzögerungsabhängiger Bremskraftregler für Kraftfahrzeuge, mit einer Trägheitskugel (1), welche sich in einem ersten Raum (4,104) befindet, wobei eine Bodenfläche (5,105) den Boden des ersten Raumes (4,104) bildet und sich in ihr ein Loch (6,106) befindet, welches den ersten Raum (4,104) mit einem zweiten Raum (7,107) verbindet, der unterhalb des ersten Raums (4,104) liegt, und durch welches ein Ventilbetätigungsstift (11) vom zweiten Raum (7,107) in den ersten Raum (4,104) ragt, über welchen von der Trägheitskugel (1) ein Ventil (8,9;108,109) gesteuert wird, durch welches die Verbindung vom ersten Raum (4,104) zum zweiten Raum (7,107) abgetrennt werden kann, wobei die Trägheitskugel (1) eine Lagerung besitzt, welche sich zumindest zum Teil als im wesentlichen stufige Anordnung (13,14,17;113,114,117) von der Bodenfläche (5,105) abhebt und der Trägheitskugel (1,101) in Ruhelage keinen horizontalen Bewegungsspielraum läßt, wobei die Trägheitskugel (1,101) mit der Bodenfläche (5,105) nicht in Berührung kommt, dadurch **gekennzeichnet,** daß die Lagerung mehrere im wesentlichen quaderförmige, bezüglich der Fahrtrichtung seitensymmetrisch, vorzugsweise zumindest teilkreisförmig um das Loch (6,106) herum angeordnete Sockel (17,13,113) aufweist und die Kugel an insgesamt mindestens drei Stellen abgestützt wird.

2. Verzögerungsabhängiger Bremskraftregler für Kraftfahrzeuge, mit einer Trägheitskugel (1), welche sich in einem ersten Raum (4,104) befindet, wobei eine Bodenfläche (5,105) den Boden des ersten Raumes (4,104) bildet und sich in ihr ein Loch (6,106) befindet, welches den ersten Raum (4,104) mit einem zweiten Raum (7,107) verbindet, der unterhalb des ersten Raums (4,104) liegt, und durch welches ein Ventilbetätigungsstift (11) vom zweiten Raum (7,107) in den ersten Raum (4,104) ragt, über welchen von der Trägheitskugel (1) ein Ventil (8,9;108,109) gesteuert wird, durch welches die Verbindung vom ersten Raum (4,104) zum zweiten Raum (7,107) abgetrennt werden kann, wobei die Trägheitskugel (1) eine Lagerung besitzt, welche sich zumindest zum Teil als im wesentlichen stufige Anordnung (13,14,17;113,114,117) von der Bodenfläche (5,105) abhebt und der Trägheitskugel (1,101) in Ruhelage keinen horizontalen Bewegungsspielraum läßt, wobei die Trägheitskugel (1,101) mit der Bodenfläche (5,105) nicht in Berührung kommt, dadurch **gekennzeichnet,** daß zumindest ein Teil der Lagerung aus mehreren Stiften (16) besteht, die schräg nach oben vom äußeren Rand der Bodenfläche (5) zum Mittelpunkt der Trägheitskugel (1) hin gerichtet sind und die vorzugsweise Stirnflächen aufweisen, welche tangential an der Trägheitskugel (1) anliegen.

3. Verzögerungsabhängiger Bremskraftregler für Kraftfahrzeuge, mit einer Trägheitskugel (1), welche sich in einem ersten Raum (4,104) befindet, wobei eine Bodenfläche (5,105) den Boden des ersten Raumes (4,104) bildet und sich in ihr ein Loch (6,106) befindet, welches den ersten Raum (4,104) mit einem zweiten Raum (7,107) verbindet, der unterhalb des ersten Raums (4,104) liegt, und durch welches ein Ventilbetätigungsstift (11) vom zweiten Raum (7,107) in den ersten Raum (4,104) ragt, über welchen von der Trägheitskugel (1) ein Ventil (8,9;108,109) gesteuert wird, durch welches die Verbindung vom ersten Raum (4,104) zum zweiten Raum (7,107) abgetrennt werden kann, wobei die Trägheitskugel (1) eine Lagerung besitzt, welche sich zumindest zum Teil als im wesentlichen stufige Anordnung (13,14,17;113,114,117) von der Bodenfläche (5,105) abhebt und der Trägheitskugel (1,101) in Ruhelage keinen horizontalen Bewegungsspielraum läßt, wobei die Trägheitskugel (1,101) mit der Bodenfläche (5,105) nicht in Berührung kommt, dadurch **gekennzeichnet,** daß die Trägheitskugel (1) bezüglich der Vorwärts-Fahrtrichtung nach vorn durch zwei Sockel (13) und nach hinten in Mittelpunkthöhe abgestützt ist.

4. Bremskraftregler nach Anspruch 3, dadurch **gekennzeichnet**, daß der hintere Teil der Lagerung aus einer vertikalen Wand besteht, welche sich - quer zur Fahrtrichtung verlaufend - hinter der Kugel befindet und dem ersten Raum (4) als Rückwand (12) dient.

5. Bremsrkraftregler nach Anspruch 3, dadurch **gekennzeichnet**, daß der hintere Teil der Lagerung aus mindestens einem horizontal von hinten in den ersten Raum (4) ragenden Stift (15) besteht.

6. Verzögerungsabhängiger Bremskraftregler für Kraftfahrzeuge, mit einer Trägheitskugel (1), welche sich in einem ersten Raum (4,104) befindet, wobei eine Bodenfläche (5,105) den Boden des ersten Raumes (4,104) bildet und sich in ihr ein Loch (6,106) befindet, welches den ersten Raum (4,104) mit einem zweiten Raum (7,107) verbindet, der unterhalb des ersten Raums (4,104) liegt, und durch welches ein Ventilbetätigungsstift (11) vom zweiten Raum (7,107) in den ersten Raum (4,104) ragt, über welchen von der Trägheitskugel (1) ein Ventil (8,9;108,109) gesteuert wird, durch welches die Verbindung vom ersten Raum (4,104) zum zweiten Raum (7,107) abgetrennt werden kann, wobei die Trägheitskugel (1) eine Lagerung besitzt, welche sich zumindest zum Teil als im wesentlichen stufige Anordnung (13,14,17;113,114,117) von der Bodenfläche (5,105) abhebt und der Trägheitskugel (1,101) in Ruhelage keinen horizontalen Bewegungsspielraum läßt, wobei die Trägheitskugel (1,101) mit der Bodenfläche (5,105) nicht in Berührung kommt, dadurch **gekennzeichnet,** daß die Trägheitskugel (101) bezüglich der Vorwärts-Fahrtrichtung (v) nach vorn von einer teilkreisförmigen Stufe (114) und nach hinten von Sockeln abgestützt ist.

7. Bremskraftregler nach einem der vorausgehenden Ansprüche, dadurch **gekennzeichnet**, daß die Lagerung den Mittelpunkt der Trägheitskugel (1,101) in Ruhelage über den Ventilbetätigungsstift (11,111) hält, wobei die Länge des Ventilbetätigungsstifts (11,111) so bemessen ist, daß er bei Ruhelage der Trägheitskugel (1,101) von der Trägheitskugel (1,101) soweit in das Loch (6,106) gedrückt wird, daß das Ventil (8,9;108,109) geöffnet ist.

8. Bremskraftregler nach einem der vorhergehenden Ansprüche, dadurch **gekennzeichnet**, daß die Lagerung zumindest teilweise von einem Einsatz (119) gebildet wird, der zwischen einem Gehäuseteil (102) und einer damit formschlüssig verbundenen Verschlußkappe (103) eingeklemmt ist und zwischen dem ersten Raum (104) und dem zweiten Raum (105) einen dritten Raum (120) schafft, der dem Auffang von Druckmittel dient.

9. Bremskraftregler nach Anspruch 8, dadurch **gekennzeichnet**, daß die Bodenfläche (105) des Einsatzes (119) außer dem Loch (106), durch das der Ventilbetätigungsstift (111) verläuft, noch weitere Löcher (121) aufweist, die den ersten Raum (104) mit dem dritten Raum (120) verbinden.

10. Bremskraftregler nach einem der Ansprüche 1,6,7,8 oder 9, dadurch **gekennzeichnet**, daß die Träg- heitskugel (101) bezüglich der Fahrtrichtung (v) nach hinten durch mindestens zwei Sockel (113) abgestützt wird, deren Abstand vom Ventilbetätigungsstift (111) größer ist als der des zur Abstützung nach vorn dienenden Teils der Lagerung und kleiner ist als der Radius der Trägheitskugel (101), und daß die Höhe der Sockel (113) so bemessen ist, daß der Mittelpunkt der Trägheitskugel (101) im stabilen Gleichgewicht genau über dem Ventilbetätigungsstift (111) liegt, wobei die Sockel (113) spiegelsymmetrisch zur Fahrtrichtung (v) angeordnet sind.

## Claims

1. A deceleration-sensitive brake power control for automotive vehicles, including an inertia ball (1) which is located in a first chamber (4, 104), a bottom area (5, 105) forming the bottom of the first chamber (4, 104) and a hole (6, 106) being formed in the bottom area which connects the first chamber (4, 104) to a second chamber (7, 107) positioned beneath the first chamber (4, 104), and through which a valve actuating pin (11) projects from the second chamber (7, 107) into the first chamber (4, 104), through which valve actuating pin a valve (8, 9; 108, 109) is controlled by the inertia ball (1), the valve serving to close the fluid connection from the first chamber (4, 104) to the second chamber (7, 107), the inertia ball (1) being provided with a seating which, at least in part, is lifted off from the bottom area (5, 105) in the shape of a substantially stepped arrangement (13, 14, 17; 113, 114, 117) and engaging the inertia ball (1, 101) without any horizontal space allowing free motion of the inertia ball in a position of rest, while the inertia ball (1, 101) does not come into contact with the bottom area (5, 105), **characterized** in that the seating is furnished with a plurality of substantially cuboid posts (17, 13, 113) which are laterally symmetrical with respect to a driving direction and which are preferably disposed around the hole (6, 106), at least pitch circle-shaped, and in that the inertia ball is supported on at least three points in total.

2. A deceleration-sensitive brake power control for automotive vehicles, including an inertia ball (1) which is located in a first chamber (4, 104), a bottom area (5, 105) forming the bottom of the first chamber (4, 104) and a hole (6, 106) being formed in the bottom area which connects the first chamber (4, 104) to a second chamber (7, 107) positioned beneath the first chamber (4, 104), and through which a valve actuating pin (11) projects from the second chamber (7, 107) into the first chamber (4, 104), through which valve actuating pin a valve (8, 9; 108, 109) is controlled by the inertia ball (1), the valve serving to close the fluid connection from the first chamber (4, 104) to the second chamber (7, 107), the inertia ball (1) being provided with a seating which, at least in part, is lifted off from the bottom area (5, 105) in the shape of a substantially stepped arrangement (13, 14, 17; 113, 114, 117) and engaging the inertia ball (1, 101) without any horizontal space allowing free motion of the inertia ball in a position of rest, while the inertia ball (1, 101) does not come into contact with the bottom area (5, 105), **characterized** in that at least part of the seating comprises a plurality of pins (16) which point obliquely upward from the external edge of the bottom area (5) toward the centre of the inertia ball (1) and which are preferably formed with front faces which are tangentially abutted against the inertia ball (1).

3. A deceleration-sensitive brake power control for automotive vehicles, including an inertia ball (1) which is located in a first chamber (4, 104), a bottom area (5, 105) forming the bottom of the first chamber (4, 104) and a hole (6, 106) being formed in the bottom area which connects the first chamber (4, 104) to a second chamber (7, 107) positioned beneath the first chamber (4, 104), and through which a valve actuating pin (11) projects from the second chamber (7, 107) into the first chamber (4, 104), through which valve actuating pin a valve (8, 9; 108, 109) is controlled by the inertia ball (1), the valve serving to close the fluid connection from the first chamber (4, 104) to the second chamber (7, 107), the inertia ball (1) being provided with a seating which, at least in part, is lifted off from the bottom area (5, 105) in the shape of a substantially stepped arrangement (13, 14, 17; 113, 114, 117) and engaging the inertia ball (1, 101) without any horizontal space allowing free motion of the inertia ball in a position of rest, while the inertia ball (1, 101) does not come into contact with the bottom area (5, 105), **characterized** in that, in respect of the forward driving direction, the inertia ball (1) is positively restrained by two posts (13) in forward direction and at the level of its centre in rearward direction.

4. A brake power control as claimed in claim 3, **characterized** in that the rear part of the seating consists of a vertical wall which, extending transversely with respect to the driving direction, is located behind the ball and serves as a rear wall (12) for the first chamber (4).

5. A brake power control as claimed in claim 3, **characterized** in that the rear part of the seating comprises at least one pin (15) projecting into the first chamber (4) horizontally from the rear.

6. A deceleration-sensitive brake power control for automotive vehicles, including an inertia ball (1) which is located in a first chamber (4, 104), a bottom area (5, 105) forming the bottom of the first chamber (4, 104) and a hole (6, 106) being formed in the bottom area which connects the first chamber (4, 104) to a second chamber (7, 107) positioned beneath the first chamber (4, 104), and through which a valve actuating pin (11) projects from the second chamber (7, 107) into the first chamber (4, 104), through which valve actuating pin a valve (8, 9; 108, 109) is controlled by the inertia ball (1), the valve serving to close the fluid connection from the first chamber (4, 104) to the second chamber (7, 107), the inertia ball (1) being provided with a seating which, at least in part, is lifted off from the bottom area (5, 105) in the shape of a substantially stepped arrangement (13, 14, 17; 113, 114, 117) and engaging the inertia ball (1, 101) without any horizontal space allowing free motion of the inertia ball in a position of rest, while the inertia ball (1, 101) does not come into contact with the bottom area (5, 105), **characterized** in that the inertia ball (101), with respect to the forward driving direction (v), is positively restrained by a pitch circle-shaped step (114) in the forward direction and by posts in the backward direction.

7. A brake power control as claimed in any one of the preceding claims,
**characterized** in that the seating retains the centre of the inertia ball (1, 101) in the position of rest above the valve actuating pin (11, 111), the length of the valve actuating pin (11, 111) being sized such that, in the position of rest of the inertia ball (1, 101), the valve actuating pin is pressed by the inertia ball (1, 101) into the hole (6, 106) sufficiently so that the valve (8, 9; 108, 109) is thereby open.

8. A brake power control as claimed in any one of the preceding claims,
**characterized** in that the seating is constituted at least in part by an insert (119) which is clamped between a housing part (102) and a closing cap (103) which is coupled to the former in a positive locking engagement and which forms a third chamber (120) positioned between the first chamber (104) and the second chamber (105) and serving to collect pressure fluid.

9. A seating as claimed in claim 8,
**characterized** in that apart from the hole (106) through which the valve actuating pin (111) extends, the bottom area (105) of the insert (119) is furnished with further holes (121) which connect the first chamber (104) to the third chamber (120).

10. A brake power control as claimed in anyone of claims 1, 6, 7, 8 or 9,
**characterized** in that, with respect to the driving direction (v), the inertia ball (101) is positively restrained in an opposite direction by at least two posts (113) at a distance from the valve actuating pin (111) greater than the part of the seating restraining the inertia ball in a forward direction, and lesser than the radius of the inertia ball (101), and in that the height of the posts (113) is such that, in the stable equilibrium condition, the centre of the inertia ball (101) is situated exactly above the valve actuating pin (111), the posts (113) being disposed specularly symmetrically with respect to the driving direction (v).

## Revendications

1. Régulateur de force de freinage en fonction de la décélération, pour véhicule automobile, comprenant une bille d'inertie (1) qui est disposée dans une première chambre (4, 104), une surface de fond (5, 105) formant le fond de la première chambre (4, 104) et comportant un trou (6, 106) qui est ménagé dans cette surface et fait communiquer la première chambre (4, 104) avec une deuxième chambre (7, 107), située au-dessous de la première chambre (4, 104), et par lequel pénètre, de la deuxième chambre (7, 107) dans la première chambre (4, 104), une tige d'actionnement de valve (11) par l'intermédiaire de laquelle est commandée, par la bille d'inertie (1), une valve (8, 9; 108, 109) au moyen de laquelle la communication entre la première chambre (4, 104) et la deuxième chambre (7, 107) peut être interrompue, tandis que la bille d'inertie (1) possède un siège qui est, au moins en partie, en surélévation vis-à-vis de la surface de fond (5, 105), sous la forme d'un agencement essentiellement étagé (13, 14, 17 ; 113, 114, 117) et n'offre à la bille d'inertie (1, 101), dans sa position de repos, aucun jeu de déplacement horizontal, la bille d'inertie (1, 101) ne venant pas au contact de la surface de fond (5, 105), caractérisé en ce que le siège comporte plusieurs plots (17, 13, 113) essentiellement parallélépipédiques, symétriques par rapport à un plan vis-à-vis de la direction de déplacement du véhicule et disposés, de préférence au moins en forme d'arc de cercle, autour du trou (6, 106), et en ce que la bille est soutenue en tout en au moins trois emplacements.

2. Régulateur de force de freinage en fonction de la décélération, pour véhicule automobile, comprenant une bille d'inertie (1) qui est disposée dans une première chambre (4, 104), une surface de fond (5, 105) formant le fond de la première chambre (4, 104) et comportant un trou (6, 106) qui est ménagé dans cette surface et fait communiquer la première chambre (4, 104) avec une deuxième chambre (7, 107), située au-dessous de la première chambre (4, 104), et par lequel pénètre, de la deuxième chambre (7, 107) dans la première chambre (4, 104), une tige d'actionnement de valve (11) par l'intermédiaire de laquelle est commandée, par la bille d'inerte (1), une valve (8, 9 ; 108, 109) au moyen de laquelle la communication entre la première chambre (4, 104) et la deuxième chambre (7, 107) peut être interrompue, tandis que la bille d'inertie (1) possède un siège qui est, au moins en partie, en surélévation vis-à-vis de la surface de fond (5, 105), sous la forme d'un agencement essentiellement étagé (13, 14, 17 ; 113, 114, 117) et n'offre à la bille d'inertie (1, 101), dans sa position de repos, aucun jeu de déplacement horizontal, la bille d'inertie (1, 101) ne venant pas au contact de la surface de fond (5, 105), caractérisé en ce qu'au moins une partie du siège est constituée de plusieurs tiges (16) qui sont orientées d'une manière inclinée vers le haut, du bord extérieur de la surface de fond (5) vers le centre de la bille d'inerte (1), et qui comportent de préférence des surfaces frontales qui sont en appui tangentiel sur la bille d'inertie (1).

3. Régulateur de force de freinage en fonction de la décélération, pour véhicule automobile, comprenant une bille d'inertie (1) qui est disposée dans une première chambre (4, 104), une surface de fond (5, 105) formant le fond de la première chambre (4, 104) et comportant un trou (6, 106) qui est ménagé dans cette surface et fait communiquer la première chambre (4, 104) avec une deuxième chambre (7, 107), située au-dessous de la première chambre (4, 104), et par lequel pénètre, de la deuxième chambre (7, 107) dans la première chambre (4, 104), une tige d'actionnement de valve (11) par l'intermédiaire de laquelle est commandée, par la bille d'inertie (1), une valve (8, 9 ; 108, 109) au moyen de laquelle la communication entre la première chambre (4, 104) et la deuxième chambre (7, 107) peut être interrompue, tandis que la bille d'inertie (1) possède un siège qui est, au moins en partie, en surélévation vis-à-vis de la surface de fond (5, 105), sous la forme d'un agencement essentiellement étagé (13, 14, 17 ; 113, 114, 117) et n'offre à la bille d'inertie (1, 101), dans sa position de repos, aucun jeu de déplacement horizontal, la bille d'inertie (1, 101) ne venant pas au contact de la surface de fond (5, 105), caractérisé en ce que, vis-à-vis de la direction de déplacement du véhicule vers l'avant, la bille d'inertie (1) est soutenue vers l'avant par deux plots (13) et vers l'arrière à hauteur de son centre.

4. Régulateur de force de freinage selon la revendication 3, caractérisé en ce que la partie arrière du siège est constituée par une paroi verticale qui est située derrière la bille - en s'étendant transversalement à la direction de déplacement du véhicule - et qui sert de paroi arrière à la première chambre (4).

5. Régulateur de force de freinage selon la revendication 3, caractérisé en ce que la partie arrière du siège est constituée d'au moins une tige (15) qui pénètre horizontalement, de l'arrière, dans la première chambre (4).

6. Régulateur de force de freinage en fonction de la décélération, pour véhicule automobile, comprenant une bille d'inertie (1) qui est disposée dans une première chambre (4, 104), une surface de fond (5, 105) formant le fond de la première chambre (4, 104) et comportant un trou (6, 106) qui est ménagé dans cette surface et fait communiquer la première chambre (4, 104) avec une deuxième chambre (7, 107), située au-dessous de la première chambre (4, 104), et par lequel pénètre, de la deuxième chambre (7, 107) dans la première chambre (4, 104), une tige d'actionnement de valve (11) par l'intermédiaire de laquelle est commandée, par la bille d'inertie (1), une valve (8, 9 ; 108, 109) au moyen de laquelle la communication entre la première chambre (4, 104) et la deuxième chambre (7, 107) peut être interrompue, tandis que la bille d'inertie (1) possède un siège qui est, au moins en partie, en surélévation vis-à-vis de la surface de fond (5, 105), sous la forme d'un agencement essentiellement étagé (13, 14, 17 ; 113, 114, 117) et n'offre à la bille d'inertie (1, 101), dans sa position de repos, aucun jeu de déplacement horizontal, la bille d'inertie (1, 101) ne venant pas au contact de la surface de fond (5, 105), caractérisé en ce que, vis-à-vis de la direction (v) de déplacement du véhicule vers l'avant, la bille d'inertie (101) est soutenue vers l'avant par un épaulement (114) en forme d'arc de cercle et vers l'arrière par des plots.

7. Régulateur de force de freinage selon l'une des revendications précédentes, caractérisé en ce que le siège maintient le centre de la bille d'inertie (1, 101), dans sa position de repos, au-dessus de la tige d'actionnement de valve (11, 111), la longueur de la tige d'actionnement de valve (11, 111) étant choisie de façon que, dans la position de repos de la bille d'inertie (1, 101), elle soit repoussée dans le trou (6, 106) par la bille d'inertie (1, 101) dans une mesure telle que la valve (8, 9 ; 108, 109) est ouverte.

8. Régulateur de force de freinage selon l'une des revendications précédentes, caractérisé en ce que le siège est formé, au moins partiellement, par une pièce rapportée (119) qui est serrée entre une partie de boîtier (102) et un capuchon de fermeture (103) réuni à cette partie de boîtier par complémentarité de formes et qui forme, entre la première chambre (104) et la deuxième chambre (105), une troisième chambre (120) qui sert à recueillir de l'agent de pression.

9. Régulateur de force de freinage selon la revendication 8, caractérisé en ce qu'en dehors du trou (106) dans lequel la tige d'actionnement de valve (111) passe, la surface de fond (105) de la pièce rapportée (119) comporte encore d'autres trous (121) qui font communiquer la première chambre (104) avec la troisième chambre (120).

10. Régulateur de force de freinage selon l'une des revendications 1, 6, 7, 8 ou 9, caractérisé en ce que, vis-à-vis de la direction (v) de déplacement du véhicule vers l'avant, la bille d'inertie (101) est soutenue vers l'arrière par au moins deux plots (113) dont la distance à la tige d'actionnement de valve (111) est supérieure à la partie du siège qui sert au soutien vers l'avant et est inférieure au rayon de la bille d'inertie (101), et en ce que la hauteur des pots (113) est choisie de façon que le centre de la bille d'inertie (101), en équilibre stable, soit situé exactement au-dessus de la tige d'actionnement de valve (111), les pots (113) étant disposés d'une manière symétrique par rapport à un plan vis-à-vis de la direction (v) de déplacement du véhicule.
